# EUROPEAN PATENT APPLICATION

(11) **EP 4 109 073 A1**
(43) Date of publication of application: **28.12.2022**
(21) Application number: 20919585.8
(22) Date of filing: 01.12.2020
(51) Int. Cl.: G01N 15/12, G01N 27/00

(54) **PARTICLE ANALYSIS DEVICE**

(30) Priority: 18.02.2020 JP 2020025244
(71) Applicant: NOK Corporation, Minato-ku, Tokyo 105-8585 (JP)
(72) Inventor: YOSHITOMI, Takumi, Fujisawa-shi, Kanagawa 251-0042 (JP); OKADA, Goki, Fujisawa-shi, Kanagawa 251-0042 (JP); FUJISAWA, Naohiro, Fujisawa-shi, Kanagawa 251-0042 (JP); FUTASHIMA, Ryo, Fujisawa-shi, Kanagawa 251-0042 (JP)
(74) Representative: Global IP Europe Patentanwaltskanzlei
(86) International application number: PCT/JP2020/044645
(87) International publication number: WO 2021/166360

(57) **Abstract**

A particle analysis device includes a liquid space adapted to store a liquid; a chip disposed above the liquid space, the chip having a connection pore extending vertically and communicating with the liquid space; an upper hole disposed above the chip, the upper hole extending vertically and communicating with the connection pore; a first electrode adapted to apply an electric potential to a liquid in the upper hole; and a second electrode adapted to apply an electric potential to the liquid in the liquid space. The upper hole having a diameter that is equal to or greater than the maximum width of the connection pore, and the entirety of the connection pore falling within the range of the upper hole.

## Description

### TECHNICAL FIELD

The present invention relates particle analysis devices for analyzing particles contained in a liquid.

### BACKGROUND ART

A particle analysis device having two spaces has been proposed for analyzing particles, such as exosomes, pollens, viruses, and bacteria (Patent Documents 1-4). This type of particle analysis device has a pore connecting the two spaces, in which a liquid is stored in one space and another liquid containing particles to be analyzed is stored in the other space. These spaces are provided with different electrical potentials for causing electrophoresis, so that particles pass through the pore. As the particles pass through the pore, the current value flowing through the liquid changes. By observing the change in the current value, characteristics (e.g., type, shape, and size) of the particles that passed through the pore can be analyzed. For example, it is possible to determine the number of particles of a certain type contained in the liquid.

### BACKGROUND DOCUMENT(S)

### Patent Document(s)

Patent Document 1: JP-A-2014-174022
Patent Document 2: JP-A-2017-156168
Patent Document 3: WO 2013/13430 A
Patent Document 4: WO 2013/137209 A

### SUMMARY OF THE INVENTION

In the use of this type of particle analysis device, it is desired to improve the certainty of particle analysis.

Accordingly, the present invention provides a particle analysis device that can improve the certainty of particle analysis.

According to an aspect of the present invention, there is provided a particle analysis device including a liquid space adapted to store a liquid; a chip disposed above the liquid space, the chip having a connection pore extending vertically and communicating with the liquid space; an upper hole disposed above the chip, the upper hole extending vertically and communicating with the connection pore; a first electrode adapted to apply an electric potential to a liquid in the upper hole; and a second electrode adapted to apply an electric potential to the liquid in the liquid space. The upper hole has a diameter that is equal to or greater than a maximum width of the connection pore, and an entirety of the connection pore falls within a range of the upper hole.

In this aspect, a liquid may be injected into the upper hole and another kind of liquid may be injected into the liquid space. Since the diameter of the upper hole disposed above the connection pore is equal to or greater than the maximum width of the connection pore and the entirety of the connection pore falls within the range of the upper hole, even if the liquid that flowed into the connection pore through the upper hole contains an air bubble, the air bubble smoothly moves from the connection pore to the upper hole, and the air bubble is less likely to remain inside the connection pore. If an air bubble remains inside the connection pore, the liquid in the upper hole and the liquid in the liquid space will not be in contact with each other and are electrically insulated from each other, so that analysis of particles is inhibited. However, this aspect can improve the certainty of particle analysis since the air bubble is less likely to remain.

Preferably, the connection pore has a width that increases upward. In this case, the air bubble 49 is further less likely to remain inside the connection pore.

### BRIEF DESCRIPTION OF THE DRAWINGS

FIG. 1 is a perspective view showing a particle analysis device according to an embodiment of the present invention;
FIG. 2 is a side view of the particle analysis device shown in FIG. 1;
FIG. 3 is a plan view of the particle analysis device of FIG. 1;
FIG. 4 is a conceptual diagram showing the principle of particle analysis used in the particle analysis device of FIG. 1;
FIG. 5 is an exploded view of the particle analysis device shown in FIG. 1 seen from diagonally above;
FIG. 6 is an enlarged plan view showing a part of a plate on which electrodes of the particle analysis device of FIG. 1 are formed;
FIG. 7 is an enlarged cross-sectional view of the plate in FIG. 6 and a plate above it taken along line VII-VII;
FIG. 8 is an enlarged cross-sectional view of a plate of a comparative example and a plate above it;
FIG. 9 is an enlarged cross-sectional view of the plate of FIG. 6 according to a modification of the embodiment and a plate above it taken along line VII-VII;
FIG. 10 is an enlarged cross-sectional view of the plate of FIG. 6 according to another modification of the embodiment and a plate above it taken along line VII-VII;
FIG. 11 is an enlarged plan view of the plate in FIG. 10;
FIG. 12 is a plan view of a plate of the particle analysis device according to the embodiment;
FIG. 13 is an enlarged view of the plate shown in FIG. 12;
FIG. 14 is an enlarged cross-sectional view taken along line XIV-XIV in FIG. 12;
FIG. 15 is an enlarged cross-sectional view of a particle analysis device according to a comparative example taken along line XIV-XIV;
FIG. 16 is a perspective view showing a particle analysis device in accordance with a modification of the embodiment;
FIG. 17 is a side view of the particle analysis device shown in FIG. 16; and
FIG. 18 is a plan view of the particle analysis device shown in Fig. 16.

### DESCRIPTION OF EMBODIMENTS

Hereinafter, with reference to the accompanying drawings, an embodiment according to the present invention will be described. It is of note that in the drawings the scale does not necessarily reflect the product of the embodiment, and certain dimensions may be exaggerated.

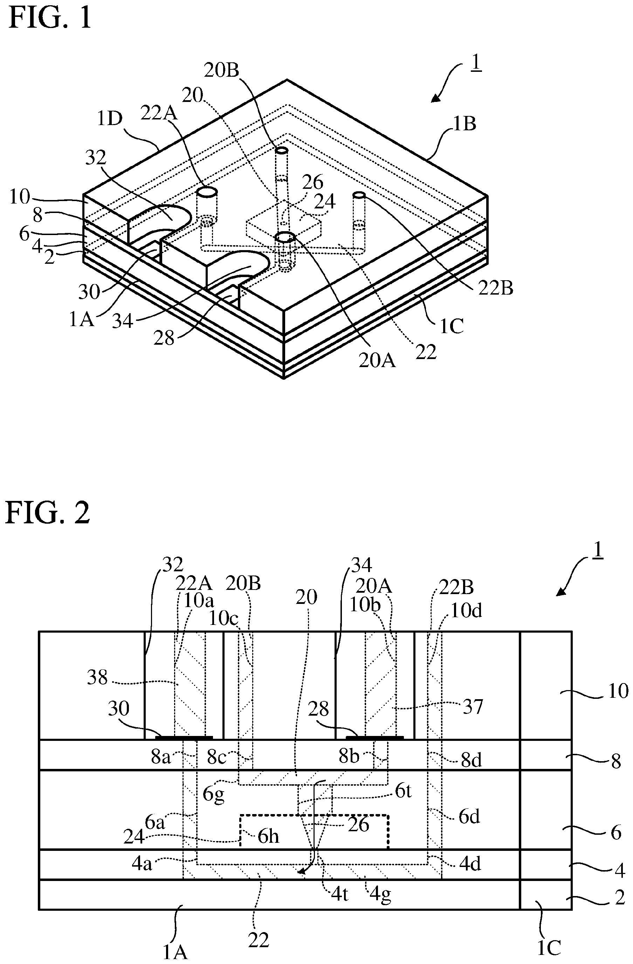

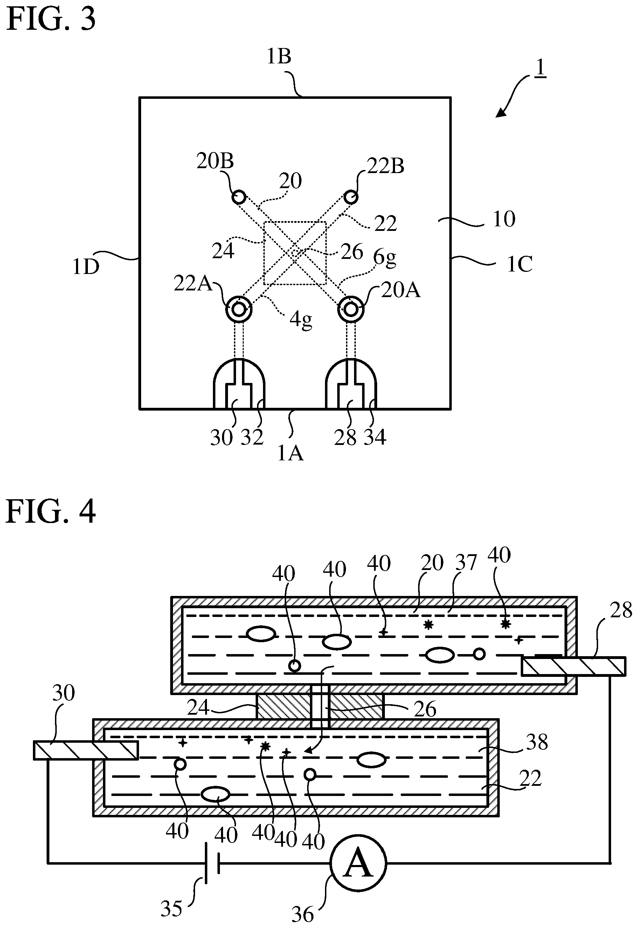

As shown in FIG. 1, a particle analysis device 1 according to an embodiment has a substantially rectangular parallelepiped shape, and the lengths of the four side surfaces 1A, 1B, 1C, and 1D are equal. That is, as shown in the plan view of FIG. 3, the particle analysis device 1 has a substantially square contour. FIG. 2 is a side view of the particle analysis device 1 showing two side surfaces 1A and 1C.

As shown in FIGS. 1, 2, and 3, the particle analysis device 1 has an upper liquid space 20, a lower liquid space 22, and a connection pore 26. Each of the liquid spaces 20 and 22 extends linearly in a horizontal direction, in which a liquid 37 is stored in the first liquid space 20 and a liquid 38 is stored in the lower liquid space 22. In FIG. 2, the liquid 37 stored in the upper liquid space 20 and the liquid 38 stored in the lower liquid space 22 are shown with different hatching patterns. The lower liquid space 22 is arranged below the upper liquid space 20, and the liquid spaces 20 and 22 are connected to each other by the connection pore 26. As shown in FIG. 3, the liquid spaces 20 and 22 intersect each other at a right angle in plan view.

The particle analysis device 1 also includes a first hole 20A, a second hole 20B, a third hole 22A, and a fourth hole 22B. The first hole 20A and the second hole 20B extend vertically from the top surface of the particle analysis device 1 to the upper liquid space 20. The third hole 22A and the fourth hole 22B extend vertically from the top surface of the particle analysis device 1 to the lower liquid space 22. The first hole 20A, the second hole 20B, and the upper liquid space 20 form a reservoir for the liquid 37. The third hole 22A, the fourth hole 22B, and the lower liquid space 22 form another reservoir for the liquid 38.

Furthermore, the particle analysis device 1 has a first electrode 28 and a second electrode 30. The first electrode 28 is used for applying an electric potential to the liquid 37 in the first liquid space 20 through the first hole 20A. The second electrode 30 is used for applying an electric potential through the third hole 22A to the liquid 38 in the lower liquid space 22. The electric potential applied by the second electrode 30 is different from that applied by the first electrode 28. For example, the second electrode 30 is an anode and the first electrode 28 is a cathode. Since the liquid spaces 20 and 22 are connected via the connection pore 26, an electric current flows through the liquid 37 and the liquid 38 inside the liquid spaces 20 and 22.

FIG. 4 schematically illustrates the principle of particle analysis used in the particle analysis device 1. In the upper liquid space 20, the liquid 37 containing particles 40 to be analyzed is stored. In the lower liquid space 22, a liquid 38, which does not originally contain the particles 40, is stored. However, the liquid 38 stored in the lower liquid space 22 may contain the particles 40. The liquid spaces 20 and 22 are connected to each other via the connection pore 26 that is a through-hole formed in a replaceable chip 24. A DC (direct current) power supply 35 and a current meter 36 are connected to the first electrode 28 and the second electrode 30. The DC power supply 35 is, for example, a battery, but is not limited to a battery.

Electrophoresis caused by the potential difference applied to the electrodes 28 and 30 causes the particles 40 contained in the liquid 37 stored in the lowermost plate 2 to pass the connection pore 26 and to flow into the liquid 38 stored in the lower liquid space 22. When the particles 40 pass through the connection pore 26, the current value flowing through the liquid 37 and the liquid 38 changes. The change in current value can be observed using the current meter 36. By observing the change in the current value, characteristics (e.g., type, shape, and size) of the particles 40 that passed through the connection pore 26 can be analyzed. For example, it is possible to determine the number of particles 40 of a certain type contained in the liquid 37. The particle analysis device 1 can be used to analyze a variety of particles, such as exosomes, pollens, viruses, and bacteria.

As shown in FIGS. 1, 2, and 3, the particle analysis device 1 includes multiple stacked square plates 2, 4, 6, 8, and 10. Preferably, some or all of these plates are formed from transparent or semi-transparent material, and storage state of the liquid 37 or the liquid 38 in the cavities of the particle analysis device 1 (the first hole 20A, the second hole 20B, the third hole 22A, and the fourth hole 22B, and the liquid spaces 20 and 22) can be observed from outside the particle analysis device 1. However, it is not absolutely necessary that the storage states of the liquids are observable, and these plates may be opaque.

The plates 2, 4, 6, 8, and 10 are formed from electrically and chemically inert and insulating materials. Each plate may be formed from a rigid material or from an elastic material. Preferred rigid materials include resin materials, such as polycarbonate, polyethylene terephthalate, acrylic, cyclic olefin, polypropylene, polystyrene, polyester, and polyvinyl chloride. Preferred elastic materials include elastomers, for example, silicone rubber containing PDMS (polydimethylsiloxane) or urethane rubber.

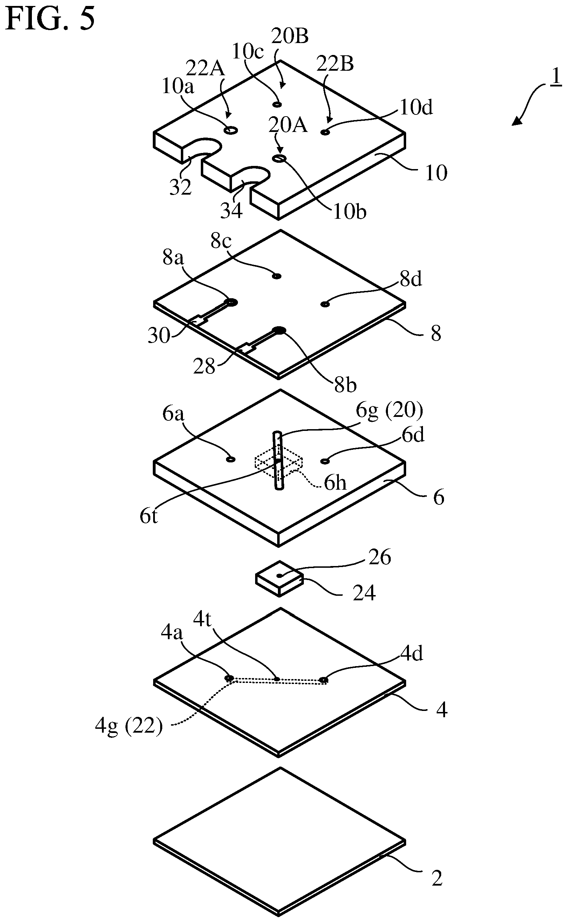

As shown in FIGS. 2 and 5, neither grooves nor holes are formed in the lowermost plate 2. The plate 2 is formed, for example, from one of the preferred rigid materials described above.

A horizontal groove 4g is formed in the center of the lower surface of the next plate 4. When the plates 2 and 4 are joined together, the groove 4g forms the lower liquid space 22. In the center of the groove 4g, a communication hole 4t penetrating the plate 4 in a vertical direction is formed. The communication hole 4t connects the lower liquid space 22 (groove 4g) with the connection pore 26 of the chip 24. In addition, vertically penetrating cylindrical through-holes 4a and 4d are formed in the plate 4. The through-holes 4a and 4d have the same diameter. The through-hole 4a communicates with one end of the groove 4g, whereas the through-hole 4d communicates with the other end of the groove 4g. The plate 4 may be formed from one of the rigid materials described above, but is preferably formed from one of the elastic materials described above.

A recess 6h having a rectangular-parallelepiped shape is formed in the center of the lower surface of the next plate 6. The recess 6h contains the chip 24 having the connection pore 26. The chip 24 is fitted into the recess 6h. The chip 24 may be removable or non-removable from the recess 6h. A horizontal groove 6g is formed in the center of the upper surface of the plate 6. When the plates 6 and 8 are joined together, the groove 6g forms the upper liquid space 20. In the center of the groove 6g, a vertically penetrating communication hole 6t is formed. The communication hole 6t connects the upper liquid space 20 (the groove 6g) with the connection pore 26 of the chip 24. The cross sections of the communication holes 4t and 6t are circular.

The plate 6 has vertically penetrating cylindrical through-holes 6a and 6d. The through-holes 6a and 6d have the same diameter as that of the through-holes 4a and 4d. The through-hole 6a communicates with the through-hole 4a of the plate 4 immediately below it, and thus with one end of the groove 4g, whereas the through-hole 6d communicates with the through-hole 4d, and thus with the other end of the groove 4g. The plate 6 may be formed from one of the rigid materials described above, but is preferably formed from one of the elastic materials described above.

The chip (nanopore chip) 24 has a rectangular parallelepiped shape, for example, a square plate shape. In the center of the chip 24, the vertically penetrating connection pore 26 is formed. The chip 24 is made from an electrically and chemically inert and insulating material, such as glass, sapphire, a ceramic, a resin, an elastomer, SiO₂, SiN, or Al₂O₃. Preferably, the chip 24 is made from a material harder than the material of the plates 2, 4, 6, 8, and 10, for example, glass, sapphire, ceramics, SiO₂, SiN, or Al₂O₃, but a resin or an elastomer may be used to form the chip 24. The user may select an appropriate chip 24 depending on the application of the particle analysis device 1. For example, the user may prepare multiple chips 24 with connection pores 26 having different dimensions or shapes, and may select a chip 24 to be fitted into the recess to change the particles 40 to be analyzed.

In the next plate 8, cylindrical through-holes 8a, 8b, 8c, and 8d penetrating the plate 8 in a vertical direction are formed. The through-holes 8a, 8b, 8c, and 8d have the same diameter as that of the through-holes 4a, 4d, 6a and 6d. The through-hole 8a communicates with the through-hole 6a of the plate 6 disposed immediately below it, whereas the through-hole 8d communicates with the through-hole 6d. The through-hole 8b communicates with one end of the groove 6g of the plate 6, whereas the through-hole 8c communicates with the other end of the groove 6g. On the upper surface of the plate 8, the electrodes 28 and 30 are arranged in parallel, and the first electrode 28 gives an electric potential to the liquid 37 in the through-hole 8b, whereas the second electrode 30 gives another electric potential to the liquid 38 in the through-hole 8a. The plate 8 may be formed from one of the rigid materials described above, but is preferably formed from one of the elastic materials described above.

In the uppermost plate 10, vertically penetrating through-holes 10a, 10b, 10c, and 10d are formed. The through-holes 10a and 10b have a diameter that is greater than that of the through-holes 8a, 8b, 8c, and 8d, whereas the through-holes 10c and 10d have a diameter that is equal to that of the through-holes 8a, 8b, 8c, and 8d. The through-holes 10a, 10b, 10c, and 10d respectively communicate with the through-holes 8a, 8b, 8c, and 8d of the plate 8 immediately below them.

In addition, on one side surface of the uppermost plate 10, a first notch 31 exposing the first electrode 28 disposed below and a second notch 34 exposing the second electrode 30 are formed. The notches 32 and 34 have a horseshoe-shape, i.e., an inverted U-shape, but their shape is not limited to the embodiment shown. The plate 10 may be formed from one of the elastic materials described above, but is formed from one of the rigid materials described above.

The aforementioned first hole 20A is constituted of the through-holes 10b and 8B and penetrates the plates 10 and 8 to reach one end of the groove 6g in the plate 6, i.e., the upper liquid space 20. In the middle of the first hole 20A, the first electrode 28 is provided. The second hole 20B is constituted of the through-holes 10c and 8c and penetrates the plates 10 and 8 to reach the other end of the groove 6g in the plate 6, i.e., the upper liquid space 20.

The third hole 22A is constituted of the through-holes 10a, 8a, 6a, and 4a and penetrates the plates 10, 8, 6, and 4 to reach one end of the groove 4g in the plate 4, i.e., the lower liquid space 22. The second electrode 30 is provided in the middle of the third hole 22A. The fourth hole 22B is constituted of the through-holes 10d, 8d, 6d, and 4d and penetrates the plates 10, 8, 6, and 4 to reach the other end of the groove 4g in the plate 4, i.e., the lower liquid space 22.

These plates 2, 4, 6, 8, and 10 can be bonded together with an adhesive. However, in order to prevent or reduce undesirable inflow of organic matter into the liquid spaces 20 and 22, it is preferable to use irradiation of vacuum ultraviolet light or oxygen plasma to join the plates 2, 4, 6, 8, and 10. When joining the plates 2, 4, 6, 8, and 10, it is preferable that the plates 2, 4, 6, 8, and 10 be compressed in a vertical direction, so that leakage of liquid from the holes 20A, 20B, 22A, and 22B and the liquid spaces 20 and 22 is prevented as far as possible after joining.

When the chip 24 is formed from a brittle material, at least one of the plates 4 and 6 around the chip 24 is preferably formed from one of the above-described elastic materials in order to prevent the chip 24 from being damaged. In addition, in order to prevent leakage of liquid in the connection pore 26 of the chip 24, the plate 6, into which the chip 24 is fitted, is preferably formed from one of the above-described elastic materials, and the recess 6h of the plate 6 preferably has dimensions (horizontal dimensions) suitable for the chip 24 to be tightly fitted. Furthermore, in order to prevent a gap from occurring between the lower surface of the chip 24 and the upper surface of the plate 4, the depth of the recess 6h is preferably the same as or slightly greater than the height of the chip 24.

The electrodes 28 and 30 are formed from materials with high electrical conductivity. For example, silver-silver chloride (Ag/AgCI), platinum, or gold can be used to form the electrodes 28 and 30. Alternatively, the electrodes 28 and 30 can be formed from a material containing any or all of these metals and an elastomer.

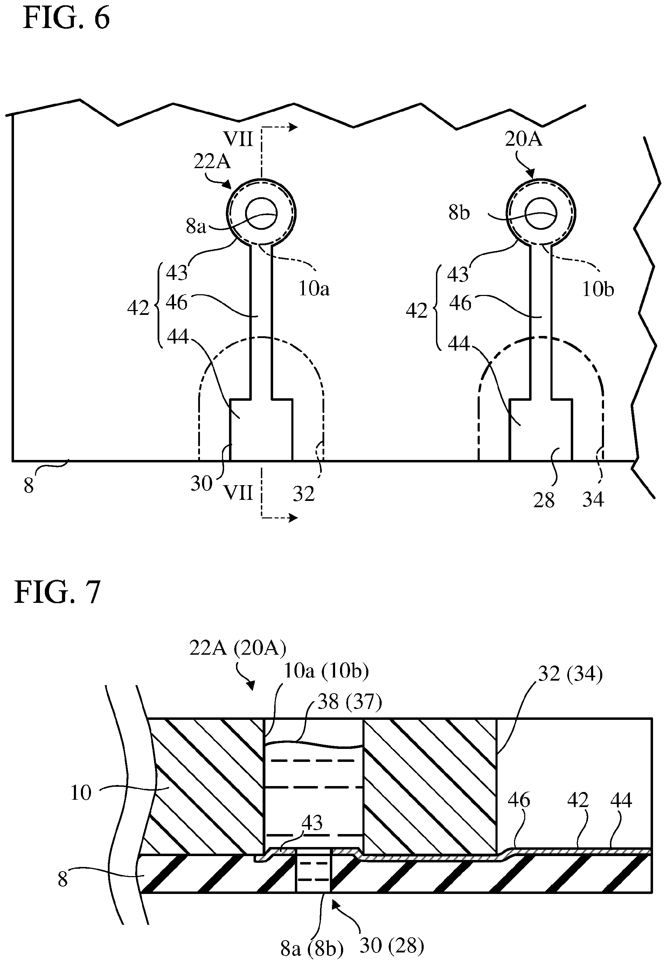

As shown in FIGS. 6 and 7, each of the electrodes 28 and 30 formed on the plate 8 has a flat portion 42 formed around the through-hole 8b or 8a (a part of the first hole 20A or the third hole 22A).

The flat portion 42 of each electrode intersects the first hole 20A or the third hole 22A at a right angle. The flat portion 42 has a circular annular overlapping portion 43, a rectangular exposed portion 44, and a long connection portion 46. The overlapping portion 43 is formed approximately concentrically with the through-hole 8b or 8a and overlaps approximately concentrically with the through-hole 10b or 10a of the plate 10 disposed immediately above it. In FIG. 6, the through-holes 10a and 10b are shown by phantom lines. The exposed portion 44 overlaps the notch 34 or 32 of the plate 10 disposed immediately above it. In FIG. 6, the notches 34 and 32 are shown in phantom lines. The connection portion 46 connects the overlapping portion 43 with the exposed portion 44. The width of the connection portion 46 is less than the outer diameter of the overlapping portion 43 and is less than the width of the exposed portion 44.

The first hole 20A has the through-hole 10b, which is an upper portion thereof above the flat portion 42 of the first electrode 28, and the through-hole 8b, which is a lower portion thereof below the flat portion 42 of the first electrode 28. The internal peripheral surface of the through-hole 8b and the through-hole 10b has a larger diameter and thus a greater area than those of the through-hole 8b. The outer diameter of the overlapping portion 43 of the flat portion 42 of the first electrode 28 is greater than the diameter of the through-hole 10b disposed immediately above it.

The third hole 22A has the through-hole 10a, which is an upper portion thereof above the flat portion 42 of the second electrode 30, and the through-hole 8a, which is a lower portion thereof below the flat portion 42 of the second electrode 30. The internal peripheral surface of the through-hole 8a and the through-hole 10a has a larger diameter and thus a greater area than those of the through-hole 8a. The outer diameter of the overlapping portion 43 of the flat portion 42 of the second electrode 30 is greater than the diameter of the through-hole 10a disposed immediately above it.

Thus, the overlapping portion 43 of the flat portion 42 of each electrode overlaps the through-hole 10b or 10a having an opening area greater than that of the through-hole 8b or 8a. Therefore, the contact area between the liquid injected into the holes and the electrodes is secured to be large, and the reliability of analysis of the particles can be improved. As shown in FIG. 7, the second electrode 30 is in contact with the liquid 38 inside the third hole 22A (through-holes 10A and 8A) with a large contact area, and the first electrode 28 is in contact with the liquid 37 inside the first hole 20A (through-holes 10b and 8b) with a large contact area.

In addition, since the outer diameter of the overlapping portion 43 is greater than that of the through-holes 10b and 10a immediately above the overlapping portion 43, so that even when the position of the overlapping portion 43 deviates slightly from the desired position (i.e., even when the accuracy of the position of the overlapping portion 43 is incorrect, the overlapping portion 43 overlaps the through-hole 10b or 10a with a high degree of reliability. Accordingly, in a plurality of particle analysis devices 1, the contact area of the liquid injected into the holes and the electrodes is uniform, and the reliability of the particle analysis can be improved.

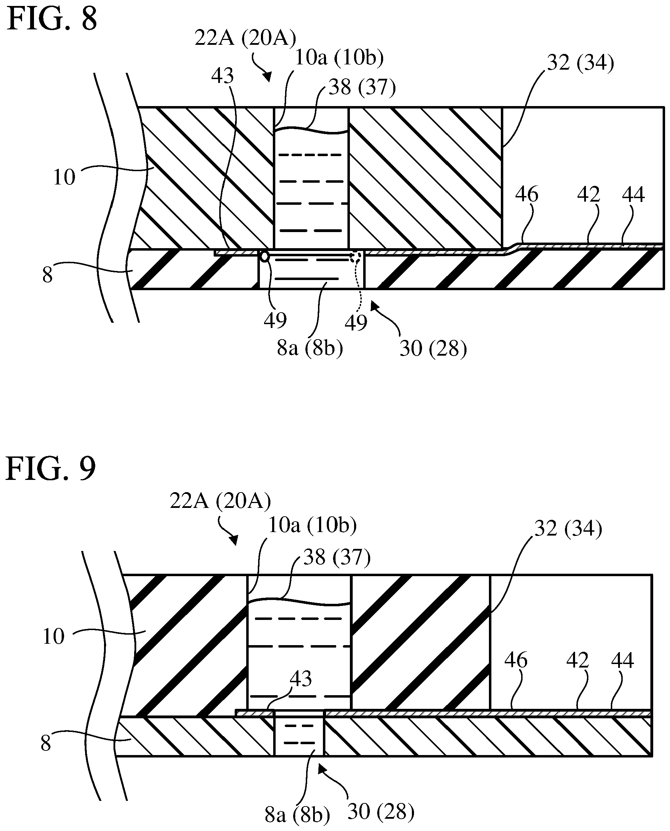

FIG. 8 is an enlarged cross-sectional view of the plate 8 of a comparative example and the plate 10 above it, showing in the same manner as in FIG. 7, and corresponds to a cross-sectional view taken along line VII-VII in FIG. 6. Contrary to the embodiment, in this comparative example, the upper through-holes 10a and 10b have a smaller diameter and thus a smaller area than those of the lower through-holes 8a and 8b. In this case, the overlapping portion 43 of each electrode, which is concentric to the through-holes 8a and 10a or 8b and 10b, does not overlap the upper through-hole 10a or 10b, so that each electrode contacts the liquid 37 or the liquid 38 only at the edge of the hole of the overlapping portion 43. Therefore, the contact area between the electrodes and the liquid is small. In addition, the upper through-holes 10a and 10b are smaller in diameter than the lower through-holes 8a and 8b, so that after injecting the liquids 37 and 38 into the holes 22A and 20A, there is a possibility that air bubbles 49 remain in the upper corners of the through-holes 8A and 8B. Such air bubbles 49 further reduce the contact area between the electrode and the liquid. Even if the diameter of the upper through-holes 10a and 10b is the same as that of the lower through-holes 8a and 8b, these disadvantages may occur. This embodiment eliminates these disadvantages that may occur in the comparative example shown in FIG. 8.

In this embodiment, the plate 8, on which the electrodes 28 and 30 are formed, is preferably formed from an elastic material. The flat portion 42 of each of the first electrode 28 and the second electrode 30 is placed on the upper surface of the plate 8. Since the flat portion 42 of each of the electrodes is placed on the upper surface of the plate 8, formed from an elastic material, when the flat portion 42 receives an upper load of the uppermost plate 10, the plate 8 immediately below the flat portion 42 deforms elastically, as shown in FIG. 7. Each electrode is adjacent to the hole 20A or 22A, into which the liquid is injected, but the plate 8 deforms elastically and the overlapping portion 43 of the flat portion 42 also deforms elastically. Accordingly, even in a case in which the thickness of the overlapping portion 43 of the flat portion 42 is large, there is little risk of leakage of liquid between the plate 8 and the plate 10 above the plate 8.

Instead of or in addition to this, the plate 10 immediately above the plate 8 may be formed of an elastic material. In this case, as shown in FIG. 9, when the flat portion 42 receives an upper load, the plate 10 immediately above the flat portion 42 is deforms elastically. Accordingly, even in a case in which the thickness of the overlapping portion 43 of the flat portion 42 is large, there is little risk of leakage of liquid between the plate 8 and the plate 10.

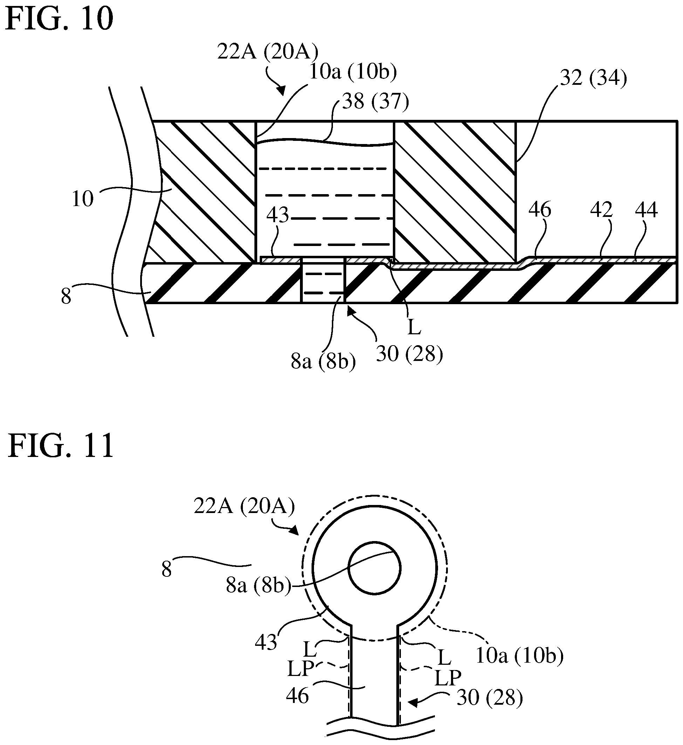

FIG. 10 is an enlarged cross-sectional view of the plate 8 of a modification of the embodiment and the plate 10 above it, showing in the same manner as in FIG. 7, and corresponds to a cross-sectional view taken along line VII-VII in FIG. 6. FIG. 11 is an enlarged plan view of the plate 8. In a manner similar to the embodiment, in this comparative example, the upper through-holes 10a and 10b have a larger diameter and thus a greater area than those of the lower through-holes 8a and 8b. The modification shown in FIG. 10 can eliminate the disadvantages that may arise in the comparative example of FIG. 8. Even when the accuracy of the position of the overlapping portion 43 is incorrect, the overlapping portion 43 overlaps the through-hole 10a or 10b with a high degree of reliability.

However, in the modification shown in FIGS. 10 and 11, the overlapping portion 43 of the flat portion 42 of the electrode has an outer diameter that is smaller than the diameter of the through-holes 10a and 10b immediately above it. As a result, the contour of each of the through-holes 10b and 10a overlaps both the electrode and the portion without the electrode, and therefore, the lower edge of each of the through-holes 10b and 10a has a step. Because of the step, a gap may occur between the plates 8 and 10 at points L at which both edges of the connection portions 46 of the flat portions 42 of the electrode intersect the contour of the through-hole 10b and 10a. Therefore, the liquid in the hole 22A or 20A may likely flow out from the points L through outflow paths LP at both edges of the connection portion 46 and also through both edges of the exposed portion 44. In FIG. 11, the outflow paths LP for the liquid are indicated by dashed lines.

However, it is possible to prevent leakage of the liquid by compressing the particle analysis device 1 in a vertical direction to eliminate the gap at the points L. Therefore, this modification may be used with, for example, a compression mechanism (not shown) that always compresses the particle analysis device 1 in a vertical direction. Such a compression mechanism may be, for example, a clamping mechanism, one or more screws, or a pinch. Alternatively, the plates 8 and 10 may be plastically deformed to prevent the occurrence of a gap between the plates 8, 10 at the points L.

On the other hand, according to the embodiment, as shown in FIGS. 6 and 7, the outer diameter of the overlapping portion 43 of the flat portion 42 of the electrode is greater than the diameter of the through-holes 10b and 10a immediately above the flat portion 42. Therefore, the contour of each of the through-holes 10b and 10a overlaps only with the overlapping portion 43 of the electrode. Therefore, the lower ends of each of the through-holes 10b and 10a are sealed at the overlapping portion 43 on the same plane without steps. In this case, without the above-described compression mechanism or plastic deformation of the plates 8 and 10, the outflow of the liquid in the holes 22A or 20A can be prevented.

As shown in FIGS. 1, 2, and 3, in the uppermost plate 10, the first notch 32, at which the flat portion 42 (in particular the entirety of the exposed portion 44) of the first electrode 28 is exposed, and the second notch 34, at which the flat portion 42 (in particular the entirety of the exposed portion 44) of the second electrode 30 is exposed, are formed. Since the notches 32 and 34 are thus provided in which the flat portions 42 of the electrodes are exposed, access to the electrodes 28 and 30 by the user (e.g., access for components connecting the electrodes to the current meter 36, etc.) is easy, and the electrodes 28 and 30 are easily connected to a power supply (DC power supply 35, see FIG. 4).

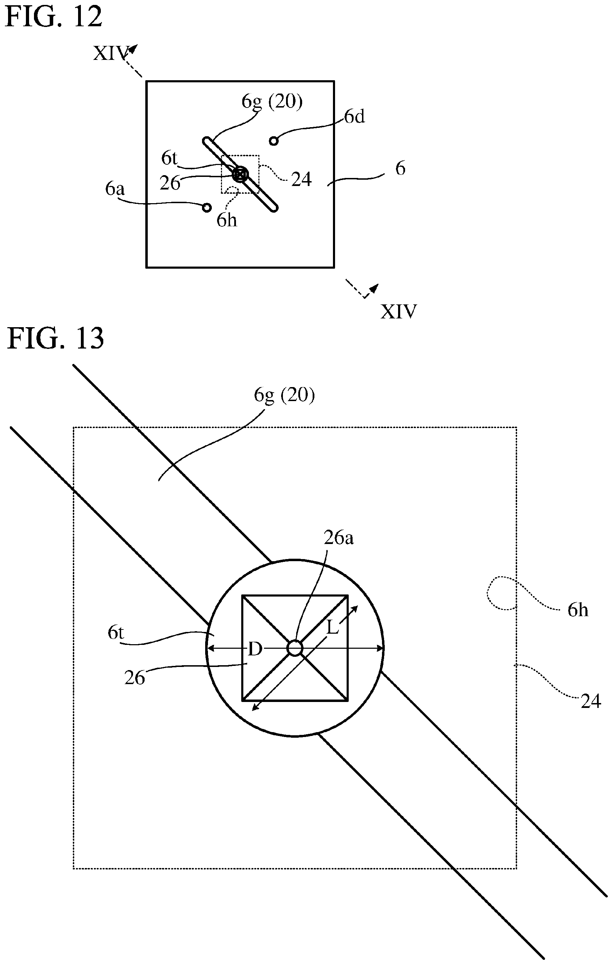

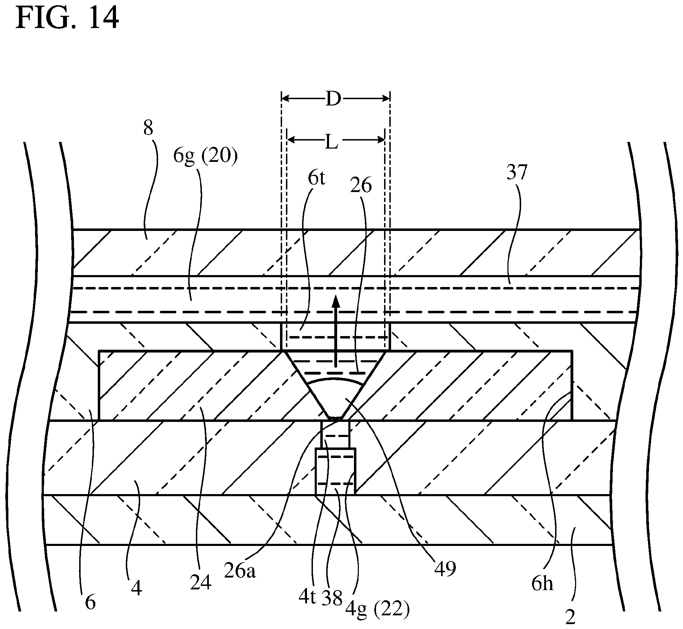

FIG. 12 is a plan view of the plate 6 of the particle analysis device 1 of the embodiment, and FIG. 13 is an enlarged view of a part of FIG. 12. FIG. 14 is a cross sectional view taken along line XIV-XIV in FIG. 12, showing not only the plate 6, but also other plates 2, 4, and 8.

As shown in FIGS. 13 and 14, in the center of the plate 6, a communication hole (upper hole) 6t penetrating the plate 6 in a vertical direction is formed. The communication hole 6t is connected to the groove 6g. The communication hole 6t is located above the chip 24, which is fitted into the recess 6h, and communicates with the connection pore 26 of the chip 24.

The circular communication hole 6t is larger than the connection pore 26, and as shown in FIG. 13, when viewed from above, the entirety of the connection pore 26 falls within the range of the communication hole 6t. In this embodiment, the connection pore 26 has a small circular lower end portion 26a, but generally has a shape of an inverted regular pyramid. This shape is caused by the use of an etching process to form the connection pore 26. The diameter D of the communication hole 6t is equal to or greater than the maximum width L of the connection pore 26, so that the communication hole 6t overlaps the entirety of the connection pore 26.

Here, the "maximum width" is the largest dimension of the connection pore 26 in the direction (i.e., the horizontal direction) orthogonal to the axial direction of the connection pore 26 (i.e., the vertical direction). For the connection pore 26 with a shape of an inverted regular pyramid, the maximum width L is the length of the diagonal at the top edge of the connection pore 26. The shape of the connection pore 26 is not limited to an inverted regular pyramid, but may be an inverted cone. For a connection pore 26 with a shape of an inverted cone, the maximum width L is the diameter at the upper edge of the connection pore 26.

As described above, the liquid 37 is stored in the groove 6g (the upper liquid space 20) and the liquid 38 is stored in the groove 4g (the lower liquid space 22) of the plate 4. The liquid 37 flows from the groove 6g into the connection pore 26 through the communication hole 6t. Since the diameter D of the communication hole 6t is equal to or greater than the maximum width L of the connection pore 26 and the entirety of the connection pore 26 falls within the range of the communication hole 6t, even if the liquid 37 contains an air bubble 49, as shown by the arrows in FIG. 14, the air bubble 49 smoothly moves (i.e., floats) from the connection pore 26 to the communication hole 6t above the connection pore 26, and the air bubble 49 is less likely to remain inside the connection pore 26.

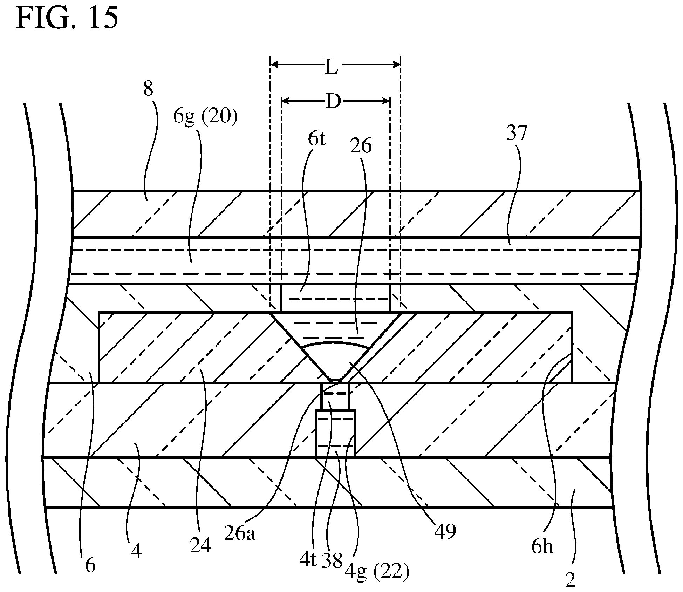

FIG. 15 is an enlarged cross-sectional view of a particle analysis device according to a comparative example taken along line XIV-XIV. In this comparative example, the diameter D of the communication hole 6t is less than the maximum width L of the connection pore 26, and the entirety of the connection pore 26 does not fall within the range of the communication hole 6t. Therefore, an air bubble 49 may remain in the vicinity of the lower end portion 26a of the connection pore 26. Especially, in a case in which the chip 24 is made from a hydrophobic material, the liquid 37 is repelled from the inner peripheral surface of the connection pore 26, and the weight of the liquid 37 is applied to the air bubble 49, so that the air bubble 49 is less likely to float. In addition, in a case in which the air bubble 49 is large, the edge of the communication hole 6t prevents the air bubble 49 from floating. If an air bubble 49 remains inside the connection pore 26, the liquid 37 in the communication hole 6t and the liquid 38 in the lower liquid space 22 will not be in contact with each other and are electrically insulated from each other, so that analysis of particles is inhibited.

To prevent an air bubble from remaining inside the connection pore 26 of the chip 24, it can be contemplated that ethanol is filled into the particle analysis device 1 before the liquids used for particles analysis are supplied to the particle analysis device 1, and thereafter, the ethanol is replaced by the liquids to be used. However, this is time-consuming.

As shown in FIG. 14, this embodiment can improve the certainty of particle analysis without such a time-consuming ethanol treatment since the air bubble 49 is less likely to remain in the embodiment.

In addition, the connection pore 26 has a shape of, for example, an inverted square pyramid or an inverted cone, and the width of the connection pore 26 increases upward. Therefore, the air bubble 49 is further less likely to remain inside the connection pore 26.

The applicant fabricated the particle analysis devices 1 according to the embodiment and the comparative example, and examined the residual of air bubble in the connection pore 26 of each particle analysis device. The maximum width L of the connection pore 26 was 1.68 mm in the embodiment and the comparative example. The diameter D of the communication hole 6t in the embodiment was 2 mm (D > L), and that of the communication hole 6t in the comparison case was 1 mm (D < L).

A phosphate buffered saline with a concentration of 10% (product name "10 × PBS Buffer", code number 314-90815) manufactured by Nippon Gene Co., Ltd. was poured in the first hole 20A of each particle analysis device 1 by means of a micropipette, so that the upper liquid space 20 and lower liquid space 22 were filled with it.

In the results, in the embodiment, the phosphate buffered saline flowed from the upper liquid space 20 into the lower liquid space 22 through the communication hole 6t, the connection pore 26, and the communication hole 4t, and no air bubbles 49 remained in the connection pore 26. The electrical resistance of the phosphate-buffered salty water between the first electrode 28 and the second electrode 30 was 0.6 megaohms.

In the comparative example, an air bubble 49 remained in the connection pore 26, which prevented electric conduction between the first electrode 28 and the second electrode 30.

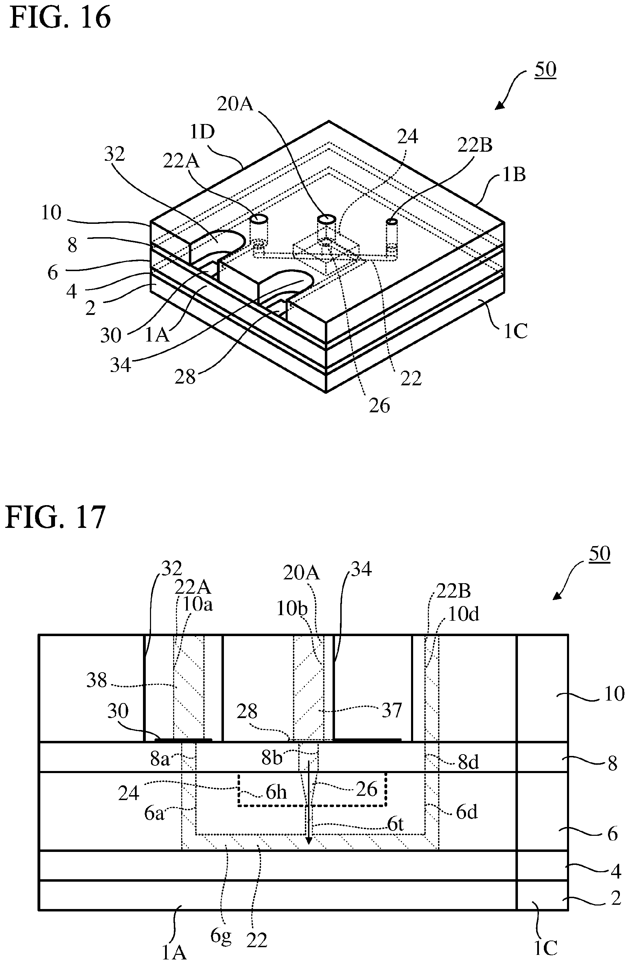

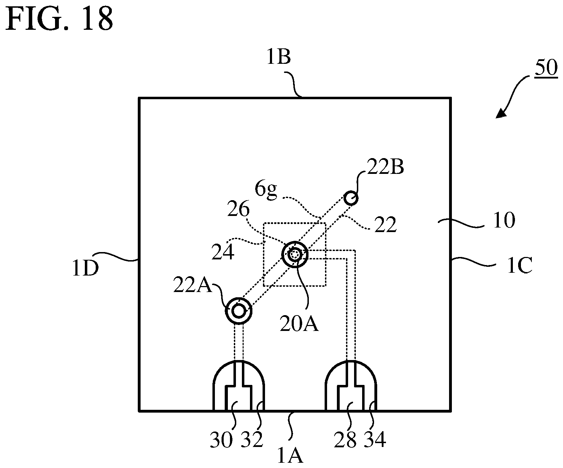

FIGS. 16 to 18 show a particle analysis device 50 according to a modification of the embodiment. The particle analysis device 50 does not have the second hole 20B (the through-holes 10c and 8c) and the upper liquid space 20. The first hole 20A (the through-holes 10b and 8b) forms a reservoir for the liquid 37.

A recess 6h having a rectangular-parallelepiped shape is formed in the center of the lower surface of the plate 6. The recess 6h contains the chip 24 having the connection pore 26. The chip 24 is fitted into the recess 6h. The chip 24 may be removable or non-removable from the recess 6h. A horizontal groove 6g is formed in the center of the lower surface of the plate 6. When the plates 6 and 8 are joined together, the groove 6g forms liquid space 22. In the center of the groove 6g, a vertically penetrating communication hole 6t is formed. The communication hole 6t connects the liquid space 22 (the groove 6g) with the connection pore 26 of the chip 24. The cross section of the communication hole 6t is circular, but is not limited to be circular.

The plate 6 has vertically penetrating cylindrical through-holes 6a and 6d. The through-holes 6a and 6d have the same diameter as each other. The through-hole 6a communicates with one end of the groove 6g, whereas the through-hole 6d communicates with the other end of the groove 6g.

The through-hole 8a of the plate 8 communicates with the through-hole 6a of the plate 6 disposed immediately below it, whereas the through-hole 8d communicates with the through-hole 6d. On the upper surface of the plate 8, the electrodes 28 and 30 are arranged, and the first electrode 28 gives an electric potential to the liquid 37 in the through-hole 8b, whereas the second electrode 30 gives another electric potential to the liquid 38 in the through-hole 8a.

The circular through-hole (upper hole) 8b is larger than the connection pore 26, and the entirety of the connection pore 26 falls within the range of the through-hole 8b. The diameter of the through-hole 8b is equal to or greater than the maximum width of the connection pore 26, so that the through-hole 8b overlaps the entirety of the connection pore 26. In this modification, again, even if the liquid 37 contains an air bubble, the air bubble smoothly moves from the connection pore 26 to the through-hole 8b above the connection pore 26, and the air bubble is less likely to remain inside the connection pore 26. Since the air bubble is less likely to remain, the certainty of particle analysis can be improved.

### Other Modifications

An embodiment of the present invention has been described. However, the foregoing description is not intended to limit the present invention, and various modifications including omission, addition, and substitution of structural elements may be made in so far as such modifications remain within the scope of the present invention.

For example, a compression mechanism (e.g., a clamping mechanism, screws, or a pinch) that constantly compresses the particle analysis device in a vertical direction may be used to improve sealing between the plates of the particle analysis device.

The number of plates in the particle analysis device is not limited to the above embodiment.

### REFERENCE SYMBOLS

1, 50: Particle analysis device
2, 4, 6, 8, 10: Plate
6, 54: Intermediate plate
20: Upper liquid space
22: Lower liquid space
20A: First hole
20B: Second hole
22A: Third hole
22B: Fourth hole
24: Chip
26: Connection pore
28: First electrode
30: Second electrode
37: Liquid
38: Liquid
40: Particles
6t: Communication hole (upper hole)
8b: Through-hole (upper hole)

## Claims

1. A particle analysis device comprising:
a liquid space adapted to store a liquid;
a chip disposed above the liquid space, the chip having a connection pore extending vertically and communicating with the liquid space;
an upper hole disposed above the chip, the upper hole extending vertically and communicating with the connection pore;
a first electrode adapted to apply an electric potential to a liquid in the upper hole; and
a second electrode adapted to apply an electric potential to the liquid in the liquid space,
the upper hole having a diameter that is equal to or greater than a maximum width of the connection pore, an entirety of the connection pore falling within a range of the upper hole.

2. The particle analysis device according to claim 1, wherein the connection pore has a width that increases upward.
